(19)

**Europäisches Patentamt**

**European Patent Office**

**Office européen des brevets**

(11) **EP 4 738 126 A1**

(12) **EUROPEAN PATENT APPLICATION**

(43) Date of publication:
06.05.2026 Bulletin 2026/19

(21) Application number: 25211093.7

(22) Date of filing: 24.10.2025

(51) International Patent Classification (IPC):
*G06F 11/32* (2006.01)

(52) Cooperative Patent Classification (CPC):
G06F 11/323

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.10.2024 US 202463713251 P
03.10.2025 US 202519349155

(71) Applicant: **Dynatrace LLC**
**Boston, Massachusetts 02210 (US)**

(72) Inventors:
• **WOHLFEIL, Esteban Pérez**
**Linz (AT)**
• **BORYSENKOV, Dmytro**
**Linz (AT)**

(74) Representative: **Steffens, Adrian**
**Boehmert & Boehmert**
**Anwaltspartnerschaft mbB**
**Pettenkoferstraße 22**
**80336 München (DE)**

(54) **VISUALIZATION OF SYSTEM LOGS USING TIME CURVES**

(57) A computer-implemented method is presented for visualizing log data captured in a computer system. The method includes: receiving a plurality of log records, where each log record includes a severity indicator; grouping log records in the plurality of log records into groups of log records, such that log records in a given group of records are chronological; for each group of log records, extracting one or more templates from a given group of log records, where each template is comprised of a text string representing log records in the given group of log records; for each group of log records, computing a similarity measure between a given group of log records and the remaining groups of log records; and visualizing the groups of log records by projecting each group of log records onto a multi-dimensional plane based on the similarity measures for the groups of log records and connecting projections for the groups of log records in chronological order using a line. (Fig. 1)

*Fig-1*

**Description**

<u>Field</u>

The present disclosure relates to techniques for summarizing and visualizing system logs using time curves.

<u>Background</u>

Analyzing log data presents significant challenges due to its poor formatting, immense volume (billions of log messages), and rapid growth (up to millions of records per second). As software systems continue to expand, both the quantity of system logs and the rate at which they are generated are expected to increase. Despite these challenges, log messages contain valuable information, such as error stack traces and execution details, that is often not documented elsewhere. Unfortunately, the semi-structured nature of system logs and their overwhelming volume make it difficult for both humans and large language models (LLMs) to interpret and explain the monitored processes effectively.

There are many sophisticated and automated solutions for narrow tasks like anomaly detection or failure prediction, which have proven that log data can be useful. However, the system log is still the last place people want to look at when they need to figure out what happened to the large systems. Therefore, this disclosure tackles a more general problem - the lack of explainability in log data analysis. In particular, the potential of the visualization techniques is explored to explain the evolution of a computing system, purely based on the log data, and suggest a new approach to solving the problem.

The most common tools for visualizing log data are dashboards, which typically display numerous detailed histograms and line plots simultaneously, allowing for interactive navigation (e.g., selecting timeframes or applying filtering queries). While dashboards are theoretically well-suited for aiding in problem analysis, mastering them can be challenging, and advanced interactions require significant time investment. Consequently, dashboards are generally not intended for use by a broad audience. However, an overall analysis of system evolution can be valuable even for individuals with limited knowledge of the system, such as small online service owners, salespeople, client support staff, and developers from related domains. This underscores the need for simple and intuitive visualization strategies.

For instance, Streamgraphs or stacked bar charts can show composition over time (counts of similar logs over time), but require categorization of the data into distinct disjoint classes with certain properties of interest, which in case of logs is not easy since the most valuable information in the system log typically lies in the semantic meaning of log messages, which is hardly measurable.

Such lack of intuitive features can potentially be addressed through the use of embeddings. Visualizing the embedding space can provide insights into the composition of semantic content by training or utilizing pre-trained text embeddings and visualizing them, such as through down-projections on scatter plots. While a robust embedding transformation can effectively display the distribution of log messages and their semantic similarities, it struggles to illustrate the evolution of the system state due to the loss of temporal context. To incorporate chronological order, one can adapt trajectory-based methods. However, in this disclosure paper, the authors manually design embeddings, which is a challenging task with log data. Additionally, the sheer volume of log messages results in an overwhelming number of points on the graph. Even with effective trajectory bundling, the results can become visually complex. In practice, system logs can easily reach millions of lines and gigabytes of data. Therefore, grouping consecutive log messages into events is crucial not only for visualization purposes but also due to computational limitations. For example, feeding an entire log file directly into any large language model (LLM) is either unfeasible or terribly expensive. While utilizing the context window may suffice for tasks such as anomaly detection, it may be unsuitable for providing a comprehensive overview of system evolution. To enable AI assistance in analyzing the evolution of the system state, one needs to develop a more abstract and concise representation of the log messages that still preserves all essential semantic information contained in the original raw data.

Thinking in terms of groups of log records (referred to as events) allows for the consideration of visually simpler techniques, such as timelines. Timelines are easy to interpret and effectively display the flow of events over time. However, they do not incorporate semantic similarity, making state analysis challenging. One might attempt to extend timelines to 2-D graphs or utilize various bump charts. This approach, however, requires splitting the sequence into meaningful subparts based on content, as demonstrated with categories of user actions. Unfortunately, it is not directly possible for the case of log records, since in order to divide the monitored processes into relevant groups and assign each log record to one of such groups, extensive knowledge about the events of the system is required. This knowledge is precisely what the proposed method attempts to extract and present.

This disclosure proposes to integrate a timeline of events with a scatter plot that projects the corresponding semantic content based on similarity, computed directly without the need for embeddings or feature design. The goal is to visualize both the temporal and similarity dimensions of the system's various states within a single plot. A direct combination of these techniques is the time-connected scatter plot. A more effective method for encoding time than static labels near data points is the use of colorful segments with discretized time. However, connecting points with straight lines can result in high visual complexity. Therefore, this disclosure considers curved lines to be a more promising approach (also referred to herein as time curves). Time curves produce smooth curves that where the connection between data points is easier to track and interpret while still allowing for the analysis of the evolution of the system state.

All in all, the proposed approach enables one to explain the main patterns of the evolution of a system and to correlate them to events such as malfunctions. This can result in a direct reduction of the time required to analyse system outages, identify performance bottlenecks, perform root cause analysis, etc., thus benefiting a wide spectrum of the industry.

This section provides background information related to the present disclosure which is not necessarily prior art.

Summary

This section provides a general summary of the disclosure, and is not a comprehensive disclosure of its full scope or all of its features. A computer-implemented method for visualizing log data captured in a computer system and a non-transitory computer-readable medium are provided according to the independent claims. The dependent claims refer to further embodiments.

According to an aspect, a computer-implemented method is presented for visualizing log data captured in a computer system. The method includes: receiving a plurality of log records, where each log record includes a severity indicator; grouping log records in the plurality of log records into groups of log records, such that log records in a given group of records are chronological; for each group of log records, extracting one or more templates from a given group of log records, where each template is comprised of a text string representing log records in the given group of log records; for each group of log records, computing a similarity measure between a given group of log records and the remaining groups of log records; and visualizing the groups of log records by projecting each group of log records onto a multi-dimensional plane based on the similarity measures for the groups of log records and connecting projections for the groups of log records in chronological order using a line.

According to another aspect, a non-transitory computer-readable medium has computer-executable instructions that, upon execution of the instructions by a processor of a computer, cause the computer to: receive a plurality of log records, where each log record includes a severity indicator; group log records in the plurality of log records into groups of log records, such that log records in a given group of records are chronological; for each group of log records, extract one or more templates from a given group of log records, where each template is comprised of a text string representing log records in the given group of log records; for each group of log records, compute a similarity measure between a given group of log records and the remaining groups of log records; and visualize the groups of log records by projecting each group of log records onto a multi-dimensional plane based on the similarity measures for the groups of log records and connecting projections for the groups of log records in chronological order using a line.

Grouping log records includes determining time gaps between consecutive log records in the plurality of log records; determining position of k-largest time gaps between log records; creating a current group of log records; sequentially processing log records in the plurality of log records by adding log records to the current group of log records until a stop condition is met; and creating a new group of log records and then continue sequential processing of log records in response to the stop condition being met, where the stop condition is met when severity indicator of next log record changes by a predefined amount, time gap to the next log record is one of k-largest time gaps, or number of log records in the current group of log records exceeds a threshold.

The method may further include maintaining an average severity for a fixed number of log records immediately preceding the next log record, where the stop condition is met when the severity indicator of the next log record changes by a predetermined amount in relation to the average severity for the fixed number of log records.

Extracting one or more templates comprises clustering the groups of log records together into one or more clusters; and for each cluster, parsing log records in a given cluster and replacing variables in the log records with a wildcard character, thereby forming templates.

Prior to the step of grouping the log records, log records in the plurality of log records can be reordered chronologically according to timestamps.

In one aspect, the similarity measure between a given group of log records and the remaining groups of log records are normalized and weighted logarithmically by size of each group. Computing a similarity measure for a given group of log records comprises: for each template in the given group of log records, calculate a distance for a given template in the given group of log records to each of the templates in the other group of log records; and aggregating the distances for each template in the given group of log records to derive a final distance for the given group of log records.

In some embodiment, the distance is further defined as a Levenshtein distance between text strings comprising a template.

Each group of log records may be projected onto a multi-dimensional plane using multi-dimensional scaling.

In some embodiments, the method includes computing a coefficient of determination for the projected log records and displaying the coefficient of determination concurrently with the projected log records.

Visualizing the groups of log records further comprises displaying information about the templates contained in a given group of log records. A summary for each group of log records, along with the templates contained within, may also be displayed.

Visualizing the groups of log records may include replaying a step-by-step animation of the line based on temporal evolution.

Additionally or alternatively, visualizing the groups of log records may include overlaying multiple curves corresponding to log data from different systems.

Further areas of applicability will become apparent from the description provided herein. The description and specific examples in this summary are intended for purposes of illustration only and are not intended to limit the scope of the present disclosure.

Drawings

The drawings described herein are for illustrative purposes only of selected embodiments and not all possible implementations, and are not intended to limit the scope of the present disclosure.

Fig. 1        is a flowchart depicting a technique for visualizing system logs using time curves.
Fig. 2        is an example log collection.
Fig. 3        is the example log collection after preprocessing and template extraction.
Fig. 4        is a flowchart depicting an example method for grouping log records.

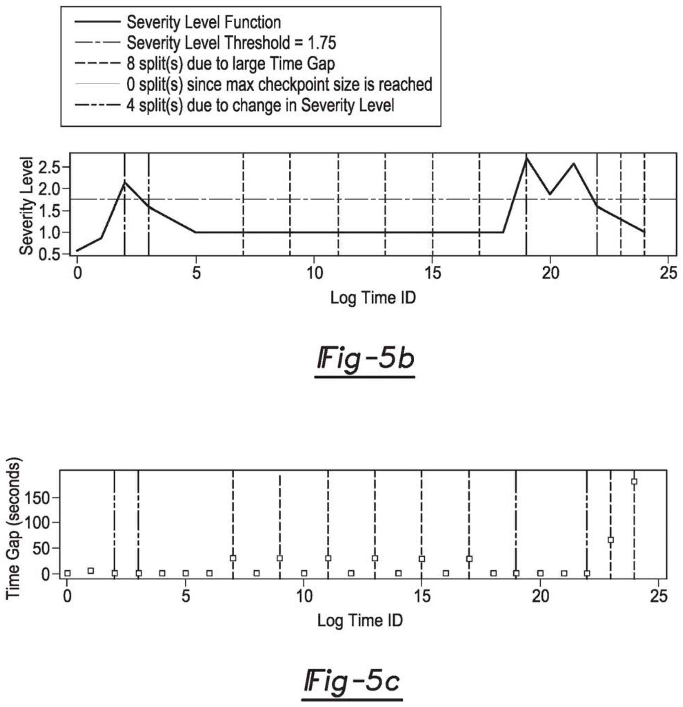

Figs. 5A-5C  are graphs providing visual explanation of grouping of the log records taken from Figure 3.
Fig. 6        are diagrams depicting projections of collected logs for three stream processing framework executions and their influence according to the weight of the time dimension. The time influence is the proportion of the linear interpolation between similarity and time. The annotated labels, from A to D represent states of interest for the analysis of the system, namely (A) startup, (B1-B5) failure injections, (C1-C5) restoration and (D) shutdown. An additional label in Kafka Streams marked with * is used to denote a singular event.
Fig. 7        is a diagram showing the identified sections of interest in a time curve corresponding to the Zookeeper logging dataset from the LogPai repository. Labels A to F represent points of interest. Two planes marked with a gradient green and red color separate the projection into left, middle and right section.
Fig. 8        is a diagram showing multiple curve analysis using three instances of the same application. The three systems are depicted with different coloring and line style, namely (1) solid purple, (2) dashed yellow and (3) dot-and-dashed green. Labels A to E represent stages of interest.
Fig. 9        is a graph showing average runtime and throughput as a function of the number of log messages of the Hadoop file system logs. Note that x-axis is in log2 scale. The left y-axis represents average runtime in seconds using stacked bars, whereas the second y-axis represents average throughput using a dashed line. Each stacked bar is decomposed by the proportion of runtime taken for each processing stage, as shown by the legend.
Fig. 10       is a graph showing average runtime and throughput as a function of the dataset. The left y-axis represents average runtime in seconds using stacked bars, whereas the second y-axis represents average throughput using a dashed line. Each stacked bar is decomposed by the proportion of runtime taken for each processing stage, as shown by the legend.

Corresponding reference numerals indicate corresponding parts throughout the several views of the drawings.

Detailed description

Example embodiments will now be described more fully with reference to the accompanying drawings.

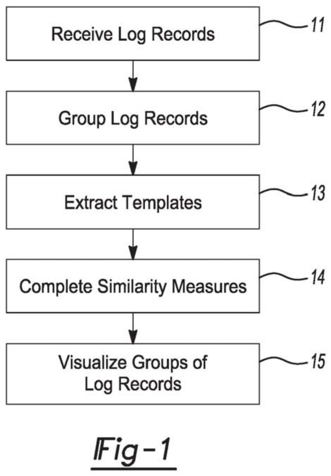

Figure 1 provides an overview of a method for visualizing log data captured in a computer system. As a starting point, a plurality of log records are received at 11 for processing by a computer. In additional to other data fields, each log record includes at least a timestamp and a severity indicator. In the case a log record does not include a timestamp it may be appended to the previous log record. Similarly, a log record without a severity indicator can be assigned a default value (e.g., lowest severity level). While reference is made to system logs and log records, it is readily understood that this technique can be applied to other data types.

Log records in the plurality of log records are then grouped at 12 into groups of log records, such that log records in a given group of records are chronological.

For each group of log records, one or more templates are extracted at 13 from a given group of log records. Each template is comprised of a text string representing log records in the given group of log records. In addition, for each group of log records, a similarity measure is computed at 14 between a given group of log records and the remaining groups of log records.

Lastly, the groups of log records are visualized by projecting each group of log records onto a multi-dimensional plane based on the similarity measures for the groups of log records and connecting projections for the groups of log records in chronological order using a curved line. Each of these steps is further described below.

The proposed method is designed to aggregate information from a large collection of system logs (or similarly structured data, such as for example, system traces) into a single and interactive representation which enables both manual examination as well as summarization support from an LLM model. In particular, the visual representation makes use of curved lines to project a sequence of meaningful events (which are automatically extracted based on event detection) onto a multi-dimensional space according to a distance metric. Therefore, the datapoints in the plot correspond to system states or events, which will be spatially closer if their content (i.e. the log messages that were produced during the event) is also similar. This enables one to not only analyze single log collections, but also to overlap concurrent system executions to show overall trends and outliers. All in all, the combination of these techniques enables users to get a much richer understanding of the behavior of a computing system.

In essence, the pipeline is composed of (1) data preprocessing, (2) grouping and template extraction, (3) distance computation and (4) projection and summarization. The data preprocessing stage focuses solely on preparing the logs by parsing, detecting and joining multiline logs together. The grouping and distance computation stage are required inherently to generate time curves. Firstly, the data must be broken down into discrete checkpoints (points in time associated with part of the data) in order to obtain a sequence of events which will be later on projected on a two-dimensional plane according to the given similarity metric. In this disclosure, checkpoints are also referred to as groups of log records. Secondly, the similarity between any two checkpoints must be quantified through a meaningful metric. Such metric does not have to be a proper distance metric as defined in the rigorous form, since eventually the visualization is a multi-dimensional scaling optimization problem which does not respect the original properties of the metric. Lastly, the projection and summarization step focus on actually producing a time curve in the form an interactive plot while also including data enriching to ease the summarization both via plain text annotation and LLM explanations.

For preprocessing, the main difference between the proposed approach and a similarity-scatter projection is the fact that the time dimension must also be kept. Therefore, in the case of logging data, one needs to extract time information. In addition, one needs to parse other useful information such as the severity level or particular keywords (e.g. Exceptions).

While there is no logging standard, the most common logging formats usually include a timestamp as well as a tag representing the severity level before including the payload. An example format is as follows: "23-09-12 13:01 WARN - Unexpected value ...". Therefore one can assume that each individual log record includes a timestamp in some form. When such is not the case, it is considered part of the previous record and thus simply appended to it. In an example embodiment, the parsing of the timestamp is done automatically through a timestamp detector which contains regular expressions for the most common formats and can be easily extended if required.

Similarly, the severity level is extracted by matching keywords, such as WARN or INFO, and then mapped into integer constants. Since severity level tags are expected to appear in the beginning of records, the search is limited to a substring of the record. This avoids misclassifying log lines where the payload might describe semantically the absence of errors. In order to treat the data as a proper time series of log records, one can sort records in ascending order according to the timestamp and therefore do not use the original ordering which might be tampered by batching or bulking mechanisms.

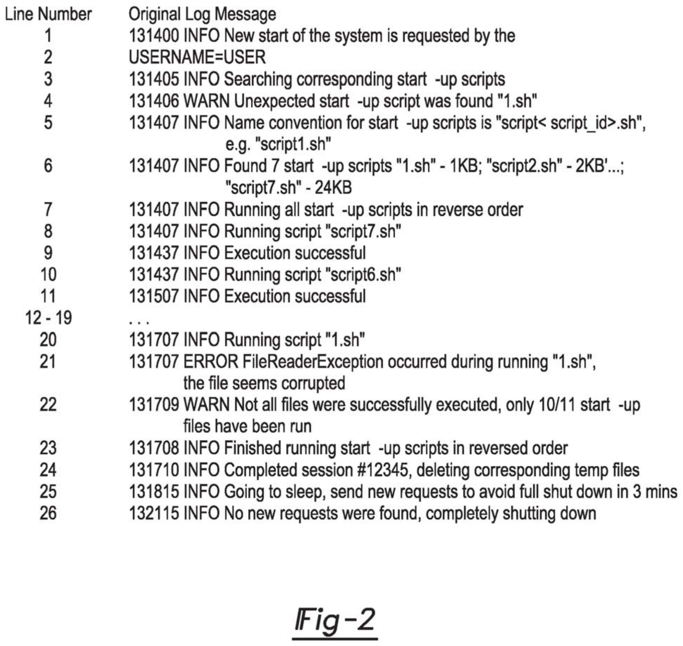

Figure 2 provides an example of a simple log collection which will be used to illustrate the impact of the preprocessing. Log line #2 in Figure 1 does not contain a timestamp and thus it is concatenated to the previous line. Log line #23 contains an earlier timestamp in comparison to log line #22, therefore both records are swapped to restore chronological order. Extraction of severity level follows by mapping the keywords to an integer value, in particular using the following mapping schema: DEFAULT → 0, INFO → 1, DEBUG → 2, WARN → 3, ERROR → 4, FATAL → 5. The higher the mapping values, the higher the impact they have on the grouping decisions into events. Note that they also may be customized for specific logging formats.

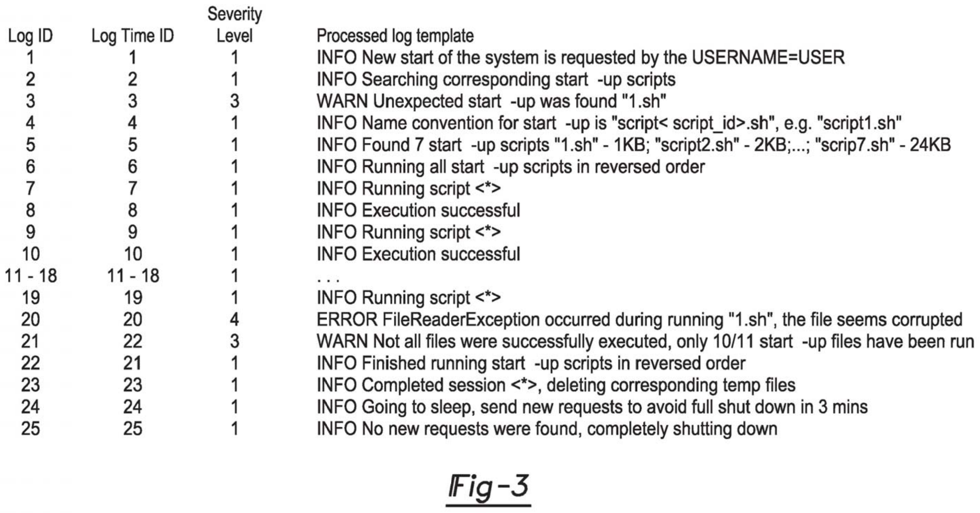

Figure 3 shows the outcome of preprocessing in the example embodiment. Note that instead of the original log messages, already-extracted templates are shown, which are based on the results of the clustering stage described below. When multiple log messages are similar, they can be grouped into a template by keeping the static parts and masking the dynamic parts (for instance, with the wildcard character <*>). In the proposed method, the clustering and corresponding masking is performed after the grouping into events in order to avoid excessive templating, i.e. where some clustering algorithms may end up wrongly masking nearly entire log lines as a consequence of not being able to algorithmically handle the complexity of the records. However, for the sake of clarity, in this example, clustering occurs before event grouping to showcase which type of tokens in the log lines are potentially wild-carded. These typically include identifiers for applications, numeric values, IP addresses, etc. It is understood that in other implementations clustering may occur before grouping.

Once records have been properly parsed, the next step is to group them into events or checkpoints, i.e. split the complete collection of logs into multiple checkpoints (or groups of log records) according to detected events.

Event detection (or grouping log records into checkpoints) is an inherently difficult problem. Multiple time series analysis or change detection algorithms exist in the literature. Nonetheless, they are typically not designed for discrete n-ary valued time series detection, such as in the case of analyzing severity level. For instance, when an error occurs, multiple other errors might follow, or a series of different types of records might be printed. The grouping approach must be able to consider such scenario and group all corresponding logs into a single event.

Therefore, if prior information about the logging system is available, one may utilize it to achieve a better grouping. This might be according to time (e.g. fixed-duration intervals), changes in time gaps, number of log records per checkpoint, fixed-number of events, etc. This enables one to control the granularity of grouping and desired level of detail in the projection, i.e. grouping records every hour can give a general overview, while grouping every minute gives more fine-grained representation and likely produces a more complex-shaped time curves. Nevertheless, the default method is an automated combination of the above which does not require any prior information about the system. It takes into account severity level of logs, the time gaps between logs and the actual size of checkpoints.

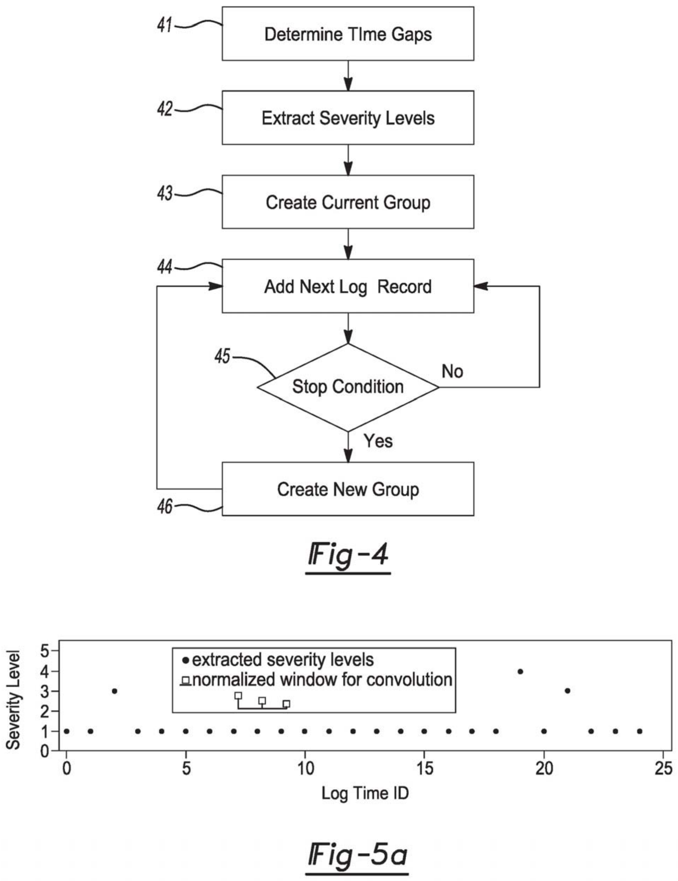

In the example embodiment, log records in the plurality of log records are grouped into groups of log records as described in relation to Figure 4. First, time gaps are determined between consecutive log records in the plurality of log records and positions of the k-largest time gaps between log records are then determined as indicated at 41. In the example embodiment, if the (k + 1)-th largest gap is equal to the k-th, k is decremented until the gaps are no longer equal or k reaches 0, indicating that more than k largest gaps are equal and time gaps will be ignored. The k-largest time gaps will be used to create new groups of log records. Severity levels are extracted from the log records at 42.

Next, a current group of log records is created as indicated at 43. Starting at the top, log records in the plurality of log records are processed sequentially. More specifically, the next log record is evaluated and added to the current group of log records at 44 until a stop condition is met. In the example embodiment, several stop conditions are used to partition groups of log records. A first stop condition occurs when the time gap to the next log record is one of the k-largest time gaps. A second stop condition occurs when the severity indicator of next log record changes by a predefined amount. In a simple example, the stop condition is met when the severity indicator changes by two. In a more robust example, an average severity for a fixed number of log records (e.g. ten records) immediately preceding the next log record is computed and the stop condition is met when the severity indicator of the next log record changes by a predetermined amount (e.g. two) in relation to the average severity for the fixed number of log records. A third stop condition occurs when number of log records in the current group of log records exceeds a threshold. Other types of stop conditions are envisioned by this disclosure.

Once a stop condition is met, a new group is created at 46 and sequential processing of log records continues at 44. This process continues until the last log record is placed into a group of log records. The general outcome of this grouping process is as follows. Errors always trigger an event unless they are part of a succession of previous errors occurred in the near past, in which case they get bundled together. Long time intervals with no production of log records result in separate events. An excessive number of records produced within a small time frame triggers an event. A proper event detection mechanism is key to generating an understandable time curve. Therefore, while the automatic grouping mechanism proposed has shown to be robust, it is also encouraged to fine-tune parameters if needed or to incorporate a priori information about the system if available.

After records have been grouped in checkpoints, one or more templates are extracted from each checkpoint. Each template is comprised of a text string representing log records in the checkpoint, i.e., group of log records.

In one embodiment, templates may be extracted by clustering the groups of log records together into one or more clusters based on similarity measures; and for each cluster, parsing log records in a given cluster and replacing variables in the log records with a wildcard character, thereby forming templates. A similarity distance is computed between all pairs of log records, for example using the Longest Common Ancestor (LCS) distance, the Jaro-Winkler distance or the Levenshtein distance. For illustration purposes, consider two example log records:

    20241105 INFO System is starting
    20241106 INFO System is rebooting

The two logs have a Levenshtein distance of 6. Grouping together into clusters the logs which are closest according to the distance and some given threshold. Normalization may be used to find a more flexible threshold. Continuing with the example above:

    2024 11 05 INFO System is starting (length = 34)
    2024 11 06 INFO System is rebooting (length = 35)

Applying length normalization, then their distance is 6 / (max(34, 35)) = 0.17. This is roughly equivalent to saying they are ~17% different. If the threshold for joining log records into clusters is 20%, then these two are joined into a cluster. It is understood that the threshold is merely illustrative and may be adjusted.

Once clusters have been formed, templates are formed by replacing variable parts of the log record with wildcard characters. To do so, each log record in a group can be tokenized, for example using a word separator such as the space character. An example using the space character is as follows:

2024 11 05 INFO System is starting
tokens: {2024, 11, 05, INFO, System, is, starting}
2024 11 06 INFO System is rebooting
tokens: {2024, 11, 06, INFO, System, is, rebooting}

Next, a frequency value for each token in the tokenized log records is computed. The frequency value of each token is used to determine if it is static or variable. If it is static, it should appear in all the log records in the cluster. This can be further improved by considering the order and position of the token in the log records. Continuing with the two example logs:

tokens: {2024, 11, 05, INFO, System, is, starting}
tokens: {2024, 11, 06, INFO, System, is, rebooting}
Token's frequency:
{2024: 2, 11: 2, 05: 1, 06: 1, INFO: 2, System: 2, is: 2, starting: 1, rebooting: 1}

The frequency of all tokens is 2, except for (05, 06, starting, rebooting) which only appear in one of the two log records. Therefore, if tokens with less than 100% frequency are masked, the result is:

2024 11 <*> INFO System is <*>
2024 11 <*> INFO System is <*>

which correspond to the templates (patterns) for the given cluster. Note that this approach is simple but very expensive because of the pairwise distance computation (resulting in $O(n^2)$ complexity). Alternative algorithms exist which make use of data structures and heuristics to obtain a similar result.

In another embodiment, a clustering algorithm may be used to extract templates which translates into faster distance computations between checkpoints. For example, the Drain algorithm may be used to extract templates from every checkpoint or event. Further information for the Drain algorithm is described by Pinjia He et al in "Drain: An online log parsing approach with fixed depth tree." In 2017 IEEE international conference on web services (ICWS), pp. 33-40. IEEE, 2017 which is incorporated by reference herein. Note that other known clustering algorithm can be used, however Drain was chosen since it has been shown to be the most performant throughout multiple datasets. The clustering step reduces the cardinality at the expense of exactitude, due to the fact that the sequence order is lost within checkpoints, since a record that appears scattered multiple times in a checkpoint will be mapped to a single template. However, and as mentioned earlier, without this step, the sheer number of log records would render the projection step nearly useless. This results into a coarse-grain aggregation of the major events and changes that happened within the system. Moreover, in case a finer-grain analysis is required (for example for relatively small datasets), the size of the checkpoints can be reduced to as small as only one record, thus rendering the effect of the clustering to none.

Once clustering has been applied, each checkpoint can be represented by a set of all the unique templates which it contains. This allows one to simplify the definition for a distance function between checkpoints which will be discussed next.

The distance function across checkpoints needs to be defined in order to compute a visual projection. For such purpose, the distance should consider both (1) the similarity between the templates of two checkpoints and (2) the number of templates. For example, if one checkpoint contains a single template which is included into another checkpoint with a larger number of templates, the distance should be high, regardless of whether one is subset of the other, since it ultimately reveals a different state of the machine that produced the system logs. In the same line, if two checkpoints contain a similar number of templates which also happen to be semantically similar (although not necessarily equal), the distance should be small.

More formally, the distance function should exhibit the following properties:

1) Checkpoints which contain the exact same templates should have a distance of 0. This will result in clusters of equal checkpoints in the final projection.
2) Checkpoints containing similar templates (but not equal) should have a small distance. Therefore, we need the distance to account for variations between templates. For instance, using the Jaccard distance REF (which checks for set similarity) would result in large distance between two sets containing System started rotating logs and System finished rotating logs, despite the fact that their context is similar since they describe the state of the rotation of logs.

3) Checkpoints which do not contain similar templates should have a large distance, regardless of whether they contain a similar number of templates.

4) Checkpoints which are subsets of other checkpoints should have a small distance, yet account for the fact that the number of templates varies.

As can be observed, the two most important properties are the string similarity between templates and the difference in the number of templates between checkpoints. Properly weighting these two is difficult and relates to the fundamental question of quantity versus quality.

Here, P is used to denote the time curve or ordered set of all N checkpoints, meaning $P = \{P_0, P_1, ..., P_{N-1}\}$. Checkpoints are denoted either as i-th element of P such as $P_i$ or explicitly with lower-case letters (e.g., x, y, z). Note that checkpoints are also ordered sets of the representative log templates, e.g. checkpoint x (with n templates) is denoted as $x := \{x_0, ..., x_{n-1}\}$, where all $x_i$ are string log templates. In addition, the set of all unique log templates across all checkpoints is denoted as

$$A := \bigcup_{x \in P} \bigcup_{i=0}^{|x|-1} x_i.$$

The cardinality of sets will be denoted with standard $|\cdot|$, for example with $|P| := N$ being the number of checkpoints in the curve, $|x| := n$ the number of templates in checkpoint x, etc. The length of a string in characters will be written as $|x_i|$. Doing so enables statements such as $P := (P_0, ..., P_{N-1}) \in A^N$.

To measure how similar (or distant) two checkpoints are, first define a similarity measure between log templates and then aggregate it across checkpoints. This is equivalent to finding an appropriate set distance where the elements of the set are strings. Note that as mentioned previously, a set distance such as the Jaccard distance could be potentially used. However, it is clearly unsuitable since strings which are nearly identical but differ in a single character would be considered different elements of the set. In the example embodiment, the distance is required to account for highly similar elements since the semantics and context is of high importance.

To account for such variability, and since log templates are represented as strings, any distance function designed for variable-length strings may be used. This includes, for example, the Levenshtein distance, the Longest Common Subsequence, the Jaro-Winkler distance, or even word-set based distances such as the q-gram distance. Other distance measures also fall within the broader aspects of this disclosure.

For illustration purposes, the example embodiment uses Levenshtein distance for three main reasons: (1) it is a proper metric distance, (2) it is the standard for string comparison and (3) there are multiple computational optimizations available to reduce its core quadratic complexity, offering a good trade-off between accuracy and performance. In this line, the Levenshtein distance is defined as the minimum number of single-character edits (insertions, deletions or substitutions) required to change one string into another. Denote the Levenshtein distance between templates x1 and x2 as d'(x1, x2). In order to avoid the effect of shorter log templates being closer to completely different templates, instead of longer but more similar templates (i.e., the Levenshtein distance of differently sized strings is governed by the length difference rather than the actual string contents), one can normalize by the length of both strings. Note that this already breaks the triangle inequality, however as mentioned before, this is not a problem since the eventual 2D projection does not fully respect the properties of the distance metric. In addition to lengths, one can also normalize by the weights used in the Levenshtein function to scale the distance between [0, 1]:

$$d(x_1, x_2) = \frac{d'(x_1, x_2)}{max(w_{\text{ins}}, w_{\text{del}}, w_{\text{sub}}) \cdot max(|x_1|, |x_2|)}$$

Note that by default, the proposed method uses $w_{\text{ins}} = w_{\text{del}} = w_{\text{sub}} = 1$ as weights, which means that the normalization occurs only by the length of the template strings. However, to further generalize the proposed distance, include the normalization by weights. In the case where a priori information about the logging system exists, a custom weighting may be used to favor certain types of editions without breaking the proposed distance.

The next step is to aggregate distances between checkpoints, i.e., sets of templates. The proposed method consists of iterating though all templates of one checkpoint to find the closest template in the other checkpoint and collect the distances. The desired properties behind this approach are: if a template is present in both checkpoints, this template adds 0 to the distance between checkpoint; if at least one template in another checkpoint is very similar to the current template, it will contribute only a small amount to the distance between checkpoints; and if all templates of another checkpoint are not similar to the current template, it will contribute significantly to the distance between checkpoints.

To maintain a normalized distance, one can employ the arithmetic mean of all the collected distances between templates of checkpoint x and y, in particular:

$$D'(x,y) := \frac{1}{|x|}\sum_{i=0}^{|x|-1} \min_{j=0,1,\dots,|y|-1} d(x_i, y_j) \qquad (1)$$

Since we iterate and average over templates of the first given checkpoint it is clear that in general D'(x, y) ≠ D'(y, x).

The simplest solution would be to average D'(x, y) and D'(y, x), i.e. let $D(x, y) := D(y, x) := \frac{D'(x,y)+D'(y,x)}{2}$. The problem is that such a measure disregards cardinal-ities of checkpoints, leading the aggregated distance to becoming too sensitive to checkpoints with fewer templates and thus not very robust. After multiple experiments considering the distribution of templates of log records, it was decided to use a logarithmic weighting of sizes, which results in the final distance function:

$$D(x,y) := \frac{\log_2 |x| \cdot D'(|x,y) + \log_2 |y| \cdot D'(y,x)}{\log_2 (|x| \cdot |y|)} \qquad (2)$$

Note that denominator $(\log_2 (|x| \cdot |y|) = \log_2 |x| + \log_2 |y|)$ just used for normalization, i.e.:
$D'(x,y), D'(x,y) \in [0,1] \Rightarrow D(x,y) = D(y,x) \in [0,1]$.

Note that the proposed distance is not a formal metric. A metric is a function that defines a concept of distance between any two members of a set and satisfies the following properties for any elements x and y from the set:

1) Non-negativity: dist(x, y) ≥ 0.
2) Identity of indiscernibles: dist(x, y) = 0 ⟺ x = y.
3) Symmetry: dist(x, y) = dist(y, x).
4) Triangle inequality: dist(x, z) ≤ dist(x, y)+dist(y, z).

Next, it is shown that D(·, ·) as defined in Eq. 2 is a semimetric over the set of all possible checkpoints. Non-negativity holds, since the Levenshtein distance is always non-negative and normalization does not have an impact on it, which implies the following:

$$D'(x,y) = \frac{1}{m}\sum_{i=0}^{m} \min_{j} d(y_i, x_j) \overset{d(x_i,y_j)\geq 0}{\geq} 0. \qquad (3)$$

$$D(x,y) \overset{(3)}{\geq} \frac{\log_2 |x| \cdot 0 + \log_2 |y| \cdot 0}{\log_2 |x| + \log_2 |y|} = 0. \qquad (4)$$

Identity of indiscernibles is also a property of D(·, ·), which can be verified as follows:

$$D(x,y) = 0 \Leftrightarrow D'(x,y) = D'(y,x) = 0$$
$$\Leftrightarrow \forall i \min_{j=0,1,\dots,(n-1)} d(x_i, y_j) = 0$$

and

$$\forall j \min_{i=0,1,\dots,(m-1)} d(y_j, x_i) = 0$$
$$\Leftrightarrow \forall i x_i \in y \text{ and } \forall j y_j \in x$$
$$\Leftrightarrow x \subseteq y \text{ and } y \subseteq x$$
$$\Leftrightarrow x = y$$

Symmetry clearly holds by definition, because D(x, y) involves both D'(x, y) and D'(y, x). The triangular inequality is the only violation of metric properties. This can be easily seen with nested checkpoints, i.e. when a checkpoint contains all templates from another checkpoint.

For visualization, the next step towards producing a time curve representation is to generate a projection of the checkpoints, which tries to preserve all pairwise distances as much as possible. This step inevitably breaks the consistency between distances (with the exception of toy examples) because it has to map from a N-dimensional distance representation of checkpoints to a 2-dimensional coordinate representation.

In the example embodiment, classical multi-dimensional scaling (cMDS, also known as Principle Coordinate Analysis) is used as projection method, but adaptations of other dimensionality reduction approaches are possible as well. The only optimization objective is to minimize the difference between the provided similarity distances and the projected distances on the two dimensional plane.

The use of projection is adequate for the visual understanding of the evolution of logging systems since the algorithm positions similar (in this representation) points close to each other and dissimilar ones further apart, so that perceived groups of events (clusters of points) are sharing the semantic meaning of the log messages.

Another key part of the projection is how the time dimension is included. While for some processes having an ordered sequence of events may be already sufficient, for other experiments it may be necessary to give more weight to the elapsed time between events. The process of transforming a similarity projection into a timeline is referred to as "time unfolding". This is effectively performed via a linear interpolation between point coordinates obtained from the similarity projection and from a static timeline. Curvature is then adjusted on the fly to preserve the smoothness between connective segments.

Although there are several methods to measure how well the projection algorithm performed, the Coefficient of Determination ($R^2$) is computed, which shows the proportion of variance in the desired distances that is captured by distances on the projection plane. $R^2$ is in range from 0 to 1, where 0.6 is considered the minimum acceptable level and values higher than 0.8 are indicative of a good fit. In some embodiments, the Coefficient of Determination is displayed concurrently with the time curve.

It is further envisioned that the visualization of the time curve can be supplemented with other information as well. In some embodiments, the time curves are presented on an interactive display. When a given data point (i.e., checkpoint) is selected by a user, additional information for the checkpoint is displayed as well. For example, information for the one or more templates associated with a checkpoint is presented on the display. In another example, a summary for the checkpoint is presented on the display, where the summary is preferably generated using a large language model. The summary for the checkpoint may be displayed in place of or in addition to the information for the templates associated with the checkpoint. In other embodiments, a step-by-step animation of the time curve based on temporal evolution can be played (or replayed) on the interactive display.

Three different types of results are presented in order to prove correctness, explainability and scalability of the proposed approach. For the case of correctness, a controlled experiment was repeated on three different stream processing frameworks and the output logs (which differ in format) were analyzed with the proposed approach. It was shown that the resulting analysis is both consistent across all frameworks as well as representative of the expected behavior of the experiment. In terms of explainability, one can analyze a publicly-available collection of system logs first manually and then automatically using LLMs at three different depth levels: (1) single datapoint summarization, (2) pairwise datapoint comparison and (3) complete time curve summarization. This shows how the visual interpretation of the time curves can be enriched with context explanations. Lastly, for the case of scalability, it was shown that the approach is able to scale efficiently for a variety of publicly-available system log datasets of both small and large scale and with varying logging formats.

The same task was executed on three different stream processing frameworks, namely Apache Flink, Apache Spark and Kafka Streams, with the expectation that the proposed method must result in the same analysis outcome in all cases. The task included a 72 minute execution of the ShuffleBench benchmark where 5 failures were automatically injected every 12 minutes using chaos engineering, starting at the 12-minute mark. The log traces of each of the frameworks were then collected and the proposed method was used to analyze them. Moreover, throughput metrics directly exported from the executions were collected in order to be correlated with the analysis and provide further evidence. Default parameters were used for the Spark and Flink executions. Kafka Streams required to fine-tune the time granularity due to the fact that the collector node received nearly no logging outputs from the failing nodes.

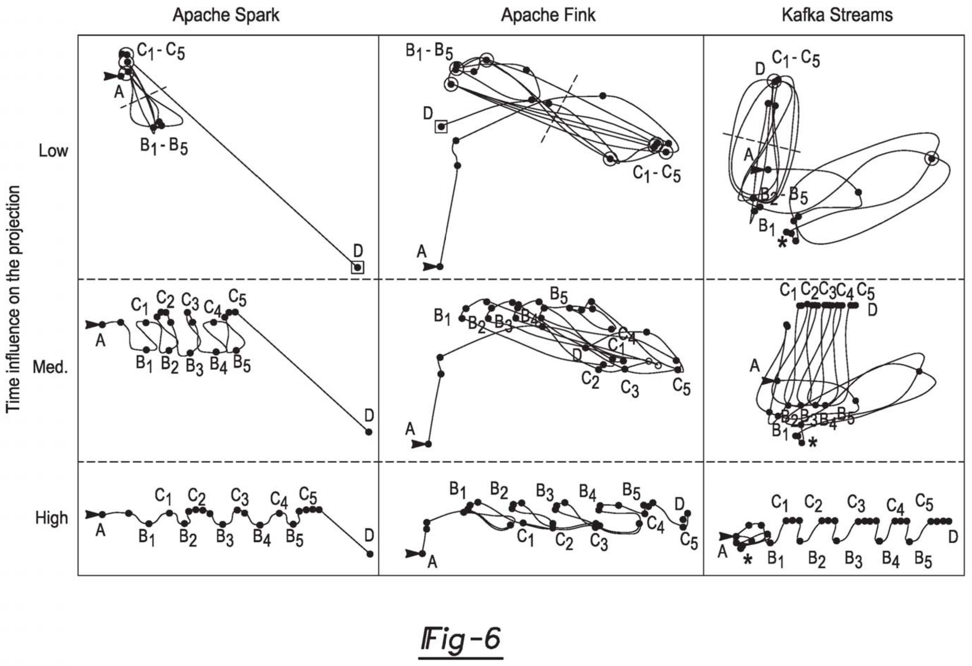

Figure 6 shows the time curve projections of each of the frameworks in three different states, either with a low, medium or high importance of the time dimension. Note that the time dimension is linearly interpolated with the similarity between data points to achieve such projection. This is provided for the only reason of overcoming the limitations of showing interactive plots within a static manuscript. In addition, Figure 6 also includes the labelling of the processing stages that take place throughout the execution, namely (A) corresponds to the startup, (B1-B5) correspond to the failure injections, (C1-C5) correspond to the restoration and (D) corresponds to the shutdown of the system.

Besides the starting and shutdown sequence, notice how the upper row of Figure 6, which corresponds to the exclusively similarity-based projection, shows a cyclic behavior. All three frameworks exhibit a linearly separable structure that splits failures from recoveries, which is shown with a dashed-black line. This becomes more apparent as the curve gets unfolded by time in the middle and lower rows.

Example logs for each of the stages can be found in Table I below. Both the startup (A) and shutdown can be easily identified since they contain unique messages. This is the case for all frameworks except for Kafka Streams, where there is no actual record corresponding to the shutdown sequence. In fact, label D contains only generic information messages regarding normal processing which is no different from the previous nodes that take place after recovery in C5. Meanwhile, startup in Spark and Flink include unique templates about system hardware configuration or environment configuration.

Similarly, both Spark and Flink curves transition much faster from startup to the first injected failure (A to B1), with Spark including a single checkpoint in between and Flink four additional ones. On the contrary, Kafka Streams is separated into two different patterns: an initial loop right after startup and a cyclic loop afterwards. The first one is due to the initial partition assignments and balancing happening before stable processing is achieved. The second one is due to the recurrent failure injections. Interestingly, it can be seen that the projection places the cluster of failures (labels B1-B5) close to the tightly coupled checkpoints of the initial partition assignment (marked with *). This is due to the large overlap in terms of logs between the initial partition assignment and the failure injections, since after a failure a re-balancing and new partition assignment is triggered.

After the first injected failure and recovery (B1 and C1), all projections exhibit a cyclic behavior. This can be clearly seen in the upper row, where failures and recoveries cluster separately. Due to the number of different logs and mined templates, small variations occur between each of the failures and the recoveries, making the checkpoints not completely equal and therefore placing them slightly apart. It should be noted that the automatic grouping of logs into checkpoints can also contribute to this instability by wrongly misplacing few logs that could potentially belong to the previous checkpoint into the next one. However, this is expected due to the difficulty of deterministically placing strict separation barriers between a continuous process.

A higher interpolation with time (i.e. bottom row) provides with nearly a timeline representation of the sequence of events. In fact, the periodicity of the events (every 12 minutes) can be seen in terms of constant distance between the failures. Moreover, time to recovery can also be inferred, showing that in most cases it also remains quite constant, although different for each framework.

While further analysis of the projection is possible, for example by increasing the desired granularity (i.e., more checkpoints), the proposed solution is not only able to capture the expected cyclic structure, but also provides additional information such as the double loop of the Kafka Streams execution due to the initialization sharing a significant similarity to the recovery of the injected failures.

Next, we analyze a publicly available log dataset, using both manual inspection and LLM summarization. The dataset in particular is the Zookeeper log collection from the LogPai repository, which contains roughly 75,000 log records collected from 32 machines. The Apache Zookeeper is a framework that enables distributed processes to communicate with each other and share resources while also providing mechanisms for fault tolerance and state preservation. The collection of logs contains records pertaining to the communication of nodes, the leader election procedure, handling client requests, etc. In this particular setting, three machines act as servers whereas the rest are clients.

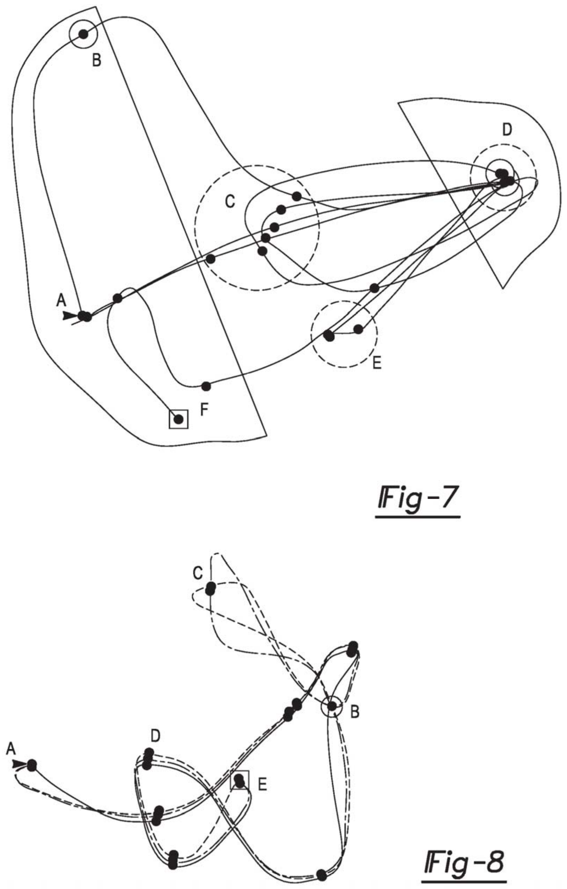

Figure 7 shows the generated time curve for the dataset along with identified points and sections of interest, including labels A to F and the left, middle and right plane sections. These will be used to describe the events taking place throughout the logs.

In general, the Zookeeper service begins with startup, where multiple rounds of elections take place to choose the leader server. These include logging messages regarding communication between the three existing servers. Once a server is elected as a leader, clients may start connecting. Such connections may be successful or not. In addition, servers may also crash due to unknown circumstances and therefore trigger new elections. The process continues for roughly 26 days according to the logs collected.

The first thing to notice is the three planes separating the left, middle and right sections, which correlate with two properties of the log records. The first one is that data points aligned to the left plane do not contain client connections, i.e. at those moments in time the system enters different states where no requests are being made by any client. As data points align towards the right, client connections begin, meaning that requests are being serviced. The other property concerns the election process. Data points aligned to the right do not contain any election procedure, therefore indicating a period of relative stability, whereas data points aligned to the left do include elections. Note for example that this correlates with startup (label A) where no client connections are happening at all and only server communication and election procedures are taking place. Therefore, these three planes split the projection into:

1) Left plane section. Startup sequence (A), initial configuration attempts (B) and end sequence (F). These do not contain any client requests and depict that the system is not in a ready state.
2) Middle plane section. Relative stability periods in which the system is servicing client requests, however it is intertwined with election procedures either routinely (C) or due to occasional crashing of a server (E).
3) Right plane section. High stability periods in which no election procedures are required and clients are connecting and requests are being fulfilled (D). No server crashes take place in these states.

Note that a cyclic pattern can be observed between the relative and high stability periods (C and D), both in terms of events and time (see drastic change in color between data points in D, which denotes a large time gap).

Further inspection of the individual labels may be possible. For instance:

1) Label A corresponds to the startup of the Zookeeper service. This involves log records such as the main thread starting the application and reading configuration files. Note that label F (and its surrounding data points) are close to A due to lack of client connections. In addition, the error "Cannot open channel to ... at election address" prevents the election to complete successfully, thus triggering further elections processes and therefore resembling the startup sequence. Such error gets resolved and the election completes at F.

2) Label B shows an interesting case: after startup and the initial election, the system enters a repetitive state where servers are trying to communicate with each other but are unsuccessful. An unspecified error results in broken connections for all servers, i.e. "Connection broken for id ..., my id = 1, error = ". This behavior takes place for roughly half an hour and is responsible for almost 75% of all the log records in the dataset. Note that despite the over representation of B, the proposed method is still able to capture several other events and behaviors.

3) The cluster of data points C contains the first data point where client connections begin to happen. Occasional elections take place as well. The variability between the data points is caused by not all checkpoints containing the same reasons for server crashes, as well as additional records such as in regards to the creation of logging files.

4) Label D shows the period of the system where highest stability is achieved without server crashes nor election procedures. Only client connections take place. Again, the variability is explained by small differences such as occasional exceptions that do not result in crashes.

5) Label E shows a large time gap between D of nearly 8 days with limited activity. The connection of clients is resumed with occasional crashing prior to returning back to the stable section in D. The main difference between E and the cluster of data points at C is that new errors appear regarding the Zookeeper service not running temporarily.

The logging output of software systems can be widely different. However, in many scenarios, two or more instances of the same software application may be running concurrently, thus increasing the likelihood of their output being similarly structured. In such a scenario, the detection of outlier behavior becomes of interest. It was shown that this approach can be used for such purpose by overlaying the projection curves of each of the instances on top of each other. Deviated behaviors, such as errors, can be seen as outlier data points in the overlaid plot.

To illustrate a multiple curve analysis, log collections were gathered corresponding to three instances of a simple server application that receives connections from clients. The application was monitored from launch to shutdown, with the main processing stage being listening to remote connections. Figure 8 shows the time curve projection of the three log collections overlaid on top of each other. Note that each system is represented with a different color (and line style) to ease visualization. In addition, due to the fact that different colors are used to represent different systems, the time dimension is no longer represented besides the order of checkpoints. The labels A to E represent the following states:

- Label A corresponds to the startup sequence. It can be observed that all three curves begin at nearly the exact location, due to the initialization being identical except the small variations, caused by e.g. different execution paths or process PIDs. These cause a very small distance that enables to differentiate between exactly equal executions and semantically equal executions.
- The startup continues until label B where the three systems enter the processing stage. The applications are listening to remote connections. Notice that each one receives a variable number of connections yet they are visually clustered in label B.
- Until stage C, processing had remained equal for all applications. However, it can be observed that two of the curves, namely the yellow dashed and the dot-and-dashed green, enter an outlier state in label C before returning to the normal processing (label B). In fact, by examining the logs corresponding to label C it can be seen that the two curves threw a An illegal reflective access operation has occurred followed by additional logging errors. These do not occur in the solid purple curve.
- After normal processing has resumed, all applications commence the shutdown sequence from label D to E. Notice that slight textual differences take place and thus produces a shift between the alignment of the data points, showing once again identical semantic execution but not exactly equal logging output.

The analysis of Figure 8 shows at first glance outlier behavior from two out of the three executions without requiring to manually diff the log collections. In a similar fashion, hundreds of curves can be overlaid at once, resulting in a coarser grain representation, with common processing paths becoming thicker as a result of the Bezier curves joining data points, as well as the outliers being still identifiable.

The proposed approach can scale efficiently both in terms of the size of the input data as well as its complexity. By size of the input data, refer to number of input log lines (which approximately results in a similar number of log records), whereas for complexity it means the distribution of the lengths of the records and the different number of templates that can be extracted. On one hand, longer log lines have an impact on performance due to the intrinsic quadratic term of the Levenshtein distance. On the other, more templates result also in a performance penalty since it is needed to compare in a pairwise fashion the set of templates of checkpoint against all other checkpoints. While this can be become a potential bottleneck, further optimizations may be applied to improve performance as a tradeoff for accuracy, such as using a computationally cheaper distance metric as replacement of the Levenshtein distance (e.g. the q-gram distance) or limiting the number of extracted templates during the clustering stage. Nevertheless, it has been shown that the proposed approach scales well with real and publicly available datasets. The experiments described in this section were run on a local machine with a Intel Core i9-11950H with disabled turbo boost running at 2.60 GHz and 64 GB of memory. Each experiment was repeated 10 times and averaged.

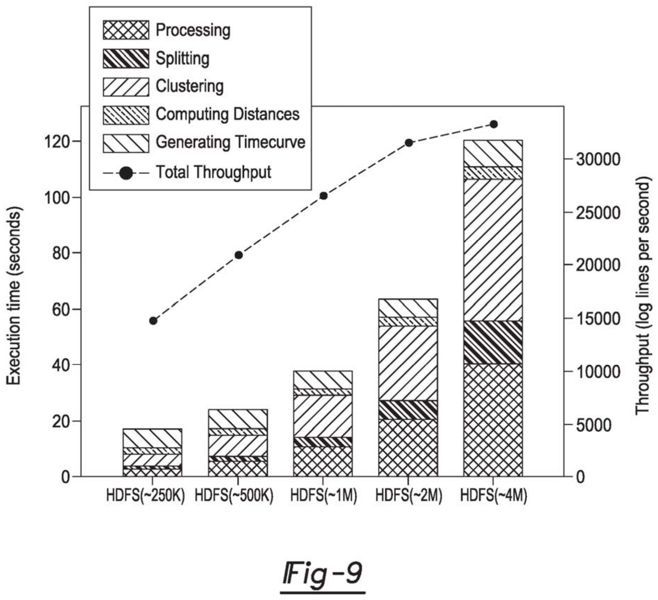

Figure 9 shows the average runtime and throughput in terms of processed records per second for an increasing number of logs. The proportion of time required by each of the stages is represented as part of the stacked bars. Note that the dataset source is kept fixed to maintain the distribution of the log records. As can be observed, the peak performance is achieved with the largest dataset containing four million log records at a processing rate of roughly 35,000 log records per second (with a single core). The smaller datasets do not contain enough log lines to pay off for (1) constant initialization factors, such as importing of libraries, (2) multidimensional projection, which depends on number of checkpoints and goodness of fit rather than number of log records, (3) curve annotation, etc. These penalties get smoothed out as the actual core processing (grouping, template extraction and distance computation) takes over when the number of records increases. It can be concluded that the throughput of the method is linear at worst given that the x-axis is in logarithm scale.

While total runtime appears to exhibit a logarithmic relationship with the number of log records, it is in fact a linear relationship given that enough records are supplied.

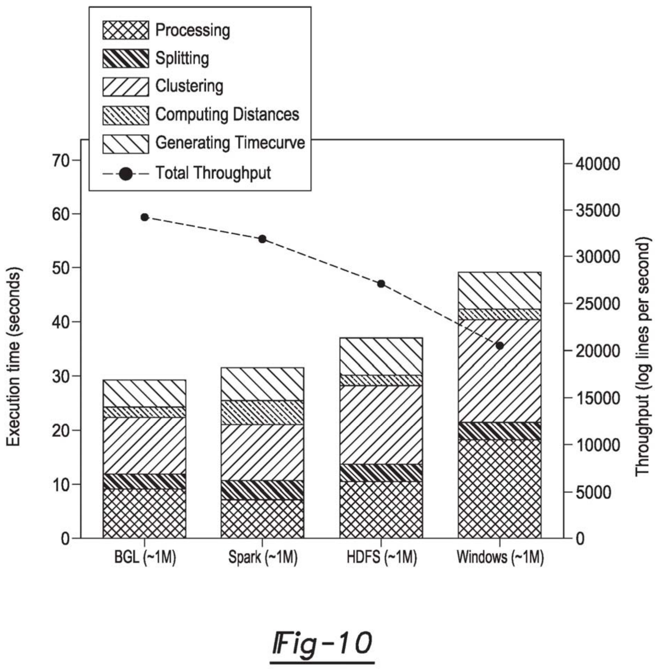

Figure 10 shows the average runtime and throughput for one million log lines of different datasets from the LogPai repository, including Spark, HDFS, BGL and Windows. The number of log lines was fixed to focus only on the variability of the dataset. Runtime proportions remain relatively stable throughout the datasets, however not constant, which can be explained by the differences in log line lengths (average varying between 102 and 140) and the number of extracted templates (from 35 to 250), the distribution of similar records, etc. It should be noted that when the number of templates is extremely large (e.g., above 500), the throughput can decrease significantly. This was observed with the Thunderbird dataset (also from the LogPai collection). The equivalent one million log lines resulted in roughly 1,600 templates and the throughput dropped by a factor of two. Nonetheless, these extreme cases can be handled by fine-tuning the clustering algorithm to achieve fewer templates and/or by limiting the maximum length of the templates used for the semimetric distance computation.

In another embodiment, the computer-implemented method for visualizing log data captured in a computer system can also be done in the following fashion: receiving a plurality of log records, where each log record includes a severity indicator; clustering the plurality of log records and extracting a template for each log record, where each template is comprised of a text string representing log records in a cluster of log records; grouping log records in the plurality of log records into groups of log records, such that log records in a given group of records are chronological; for each group of log records, computing a similarity measure between a given group of log records and the remaining groups of log records; and visualizing the groups of log records by projecting each group of log records onto a multi-dimensional plane based on the similarity measures for the groups of log records and connecting projections for the groups of log records in chronological order using a line.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Appendix

Table 1

| Stage | Apache Spark | Apache Flink | Kafka Streams |
|---|---|---|---|
| Startup | INFO SparkContext OS info Linux 5 ... x86_64 amd64 | INFO ... RESOURCE PARAMS ... logs jvm params Xmx1530082096 | INFO AppInfoParser Kafka version ... |
| Failure | ERROR ... Lost executor <*> Not receiving heartbeat ... | INFO ... <*> switched from RUNNING to FAILED on flink ... | INFO ... Added partitions ... Revoked partitions |
| Restoration | INFO ... Registered executor with ID <*> | INFO ... Marking check-point <*>as completed for source Source Kafka Source | INFO Processed <*> total records |
| Shutdown | WARN ... Disconnected from Spark cluster! ... | INFO ... Shutting down remote daemon | INFO Processed <*> total records |

**Claims**

1. A computer-implemented method for visualizing log data captured in a computer system, comprising:

   - receiving, by a computer processor, a plurality of log records, where each log record includes a severity indicator;
   - grouping, by the computer processor, log records in the plurality of log records into groups of log records, such that log records in a given group of records are chronological;
   - for each group of log records, extracting, by the computer processor, one or more templates from a given group of log records, where each template is comprised of a text string representing log records in the given group of log records;
   - for each group of log records, computing, by the computer processor, a similarity measure between a given group of log records and the remaining groups of log records; and
   - visualizing the groups of log records by projecting each group of log records onto a multi-dimensional plane based on the similarity measures for the groups of log records and connecting projections for the groups of log records in chronological order using a line.

2. The method of claim 1, wherein grouping log records comprises:

- determining time gaps between consecutive log records in the plurality of log records;
- determining position of k-largest time gaps between log records;
- creating a current group of log records;
- sequentially processing log records in the plurality of log records by adding log records to the current group of log records until a stop condition is met; and
- creating a new group of log records and then continue sequential processing of log records in response to the stop condition being met, where the stop condition is met when severity indicator of next log record changes by a predefined amount, time gap to the next log record is one of k-largest time gaps, or number of log records in the current group of log records exceeds a threshold.

3. The method of claim 2, further comprising maintaining an average severity for a fixed number of log records immediately preceding the next log record, where the stop condition is met when the severity indicator of the next log record changes by a predetermined amount in relation to the average severity for the fixed number of log records.

4. The method of any one of the preceding claims, wherein extracting one or more templates further comprises:

- clustering the groups of log records together into one or more clusters; and
- for each cluster, parsing log records in a given cluster and replacing variables in the log records with a wildcard character, thereby forming templates.

5. The method of any one of the preceding claims, further comprising reordering log records in the plurality of log records chronologically according to timestamps prior to the step of grouping the log records.

6. The method of any one of the preceding claims, wherein the similarity measure between a given group of log records and the remaining groups of log records are normalized and weighted logarithmically by size of each group.

7. The method of claim 6, wherein computing a similarity measure for a given group of log records further comprises

- for each template in the given group of log records, calculate a distance for a given template in the given group of log records to each of the templates in the other group of log records; and
- aggregating the distances for each template in the given group of log records to derive a final distance for the given group of log records.

8. The method of claim 7, wherein the distance is further defined as a Levenshtein distance between text strings comprising a template.

9. The method of any one of the preceding claims, further comprising projecting each group of log records onto a multi-dimensional plane using multi-dimensional scaling.

10. The method of any one of the preceding claims, further comprising computing a coefficient of determination for the projected log records and displaying the coefficient of determination concurrently with the projected log records.

11. The method of any one of the preceding claims, wherein visualizing the groups of log records further comprises displaying information about the templates contained in a given group of log records.

12. The method of any one of the preceding claims, further comprising displaying a summary for each group of log records along with the templates contained within.

13. The method of claim 12, further comprising summarizing template contained in a group of log records using a large language model.

14. The method of any one of the preceding claims, wherein visualizing the groups of log records further comprises at least one of:

- replaying a step-by-step animation of the line based on temporal evolution and
- overlaying multiple curves corresponding to log data from different systems.

**15.** A non-transitory computer-readable medium having computer-executable instructions that, upon execution of the instructions by a processor of a computer, cause the computer to:

- receive a plurality of log records, where each log record includes a severity indicator;
- group log records in the plurality of log records into groups of log records, such that log records in a given group of records are chronological;
- for each group of log records, extract one or more templates from a given group of log records, where each template is comprised of a text string representing log records in the given group of log records;
- for each group of log records, compute a similarity measure between a given group of log records and the remaining groups of log records; and
- visualize the groups of log records by projecting each group of log records onto a multi-dimensional plane based on the similarity measures for the groups of log records and connecting projections for the groups of log records in chronological order using a line.

Receive Log Records — 11

Group Log Records — 12

Extract Templates — 13

Complete Similarity Measures — 14

Visualize Groups of
Log Records — 15

*Fig-1*

| Line Number | Original Log Message |
|---|---|
| 1 | 131400 INFO New start of the system is requested by the |
| 2 | USERNAME=USER |
| 3 | 131405 INFO Searching corresponding start -up scripts |
| 4 | 131406 WARN Unexpected start -up script was found "1.sh" |
| 5 | 131407 INFO Name convention for start -up scripts is "script< script_id>.sh", e.g. "script1.sh" |
| 6 | 131407 INFO Found 7 start -up scripts "1.sh" - 1KB; "script2.sh" - 2KB'...; "script7.sh" - 24KB |
| 7 | 131407 INFO Running all start -up scripts in reverse order |
| 8 | 131407 INFO Running script "script7.sh" |
| 9 | 131437 INFO Execution successful |
| 10 | 131437 INFO Running script "script6.sh" |
| 11 | 131507 INFO Execution successful |
| 12 - 19 | . . . |
| 20 | 131707 INFO Running script "1.sh" |
| 21 | 131707 ERROR FileReaderException occurred during running "1.sh", the file seems corrupted |
| 22 | 131709 WARN Not all files were successfully executed, only 10/11 start -up files have been run |
| 23 | 131708 INFO Finished running start -up scripts in reversed order |
| 24 | 131710 INFO Completed session #12345, deleting corresponding temp files |
| 25 | 131815 INFO Going to sleep, send new requests to avoid full shut down in 3 mins |
| 26 | 132115 INFO No new requests were found, completely shutting down |

## Fig-2

| Log ID | Log Time ID | Severity Level | Processed log template |
|---|---|---|---|
| 1 | 1 | 1 | INFO New start of the system is requested by the USERNAME=USER |
| 2 | 2 | 1 | INFO Searching corresponding start -up scripts |
| 3 | 3 | 3 | WARN Unexpected start -up was found "1.sh" |
| 4 | 4 | 1 | INFO Name convention for start -up is "script< script_id>.sh", e.g. "script1.sh" |
| 5 | 5 | 1 | INFO Found 7 start -up scripts "1.sh" - 1KB; "script2.sh" - 2KB;...; "scrip7.sh" - 24KB |
| 6 | 6 | 1 | INFO Running all start -up scripts in reversed order |
| 7 | 7 | 1 | INFO Running script <*> |
| 8 | 8 | 1 | INFO Execution successful |
| 9 | 9 | 1 | INFO Running script <*> |
| 10 | 10 | 1 | INFO Execution successful |
| 11 - 18 | 11 - 18 | 1 | . . . |
| 19 | 19 | 1 | INFO Running script <*> |
| 20 | 20 | 4 | ERROR FileReaderException occurred during running "1.sh", the file seems corrupted |
| 21 | 22 | 3 | WARN Not all files were successfully executed, only 10/11 start -up files have been run |
| 22 | 21 | 1 | INFO Finished running start -up scripts in reversed order |
| 23 | 23 | 1 | INFO Completed session <*>, deleting corresponding temp files |
| 24 | 24 | 1 | INFO Going to sleep, send new requests to avoid full shut down in 3 mins |
| 25 | 25 | 1 | INFO No new requests were found, completely shutting down |

$$\mathbb{F}ig-3$$

EP 4 738 126 A1

*Fig-4*

*Fig-5a*

20

| | Severity Level Function |
|---|---|
| | Severity Level Threshold = 1.75 |
| | 8 split(s) due to large Time Gap |
| | 0 split(s) since max checkpoint size is reached |
| | 4 split(s) due to change in Severity Level |

*Fig-5b*

*Fig-5c*

Fig-6

_Fig-7_

_Fig-8_

Fig-9

Fig-10

Europäisches
Patentamt
European
Patent Office
Office européen
des brevets

# EUROPEAN SEARCH REPORT

**Application Number**

EP 25 21 1093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 528 162 A1 (AIT AUSTRIAN INST TECH GMBH [AT]) 21 August 2019 (2019-08-21) * paragraphs [0025], [0027], [0030], [0034] * * paragraph [0048]; figure 3 * * paragraphs [0035], [0040], [0050], [0053], [0056] * * figure 9 * ----- | 1-15 | INV. G06F11/32 |
| A | US 2011/185234 A1 (COHEN IRA [IL] ET AL) 28 July 2011 (2011-07-28) * paragraph [0016]; figure 13 * ----- | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 24 February 2026 | Loehr, Melis |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 4 738 126 A1**

## ANNEX TO THE EUROPEAN SEARCH REPORT
## ON EUROPEAN PATENT APPLICATION NO.

EP 25 21 1093

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | | Publication date | Patent family member(s) | | Publication date |
|---|---|---|---|---|---|
| EP 3528162 | A1 | 21-08-2019 | AT | 520746 A4 | 15-07-2019 |
| | | | EP | 3528162 A1 | 21-08-2019 |
| US 2011185234 | A1 | 28-07-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Drain: An online log parsing approach with fixed depth tree. **PINJIA HE et al.** 2017 IEEE international conference on web services (ICWS). IEEE, 2017, 33-40